# EUROPÄISCHE PATENTANMELDUNG

(11) **EP 3 879 493 A1**
(43) Veröffentlichungstag der Anmeldung: **15.09.2021**
(21) Anmeldenummer: 21159024.5
(22) Anmeldetag: 24.02.2021
(51) Int. Cl.: G06T 7/80, B60R 1/00

(54) **VERFAHREN ZUM VERIFIZIEREN EINES INDIREKTEN SICHTSYSTEMS**

(30) Priorität: 13.03.2020 DE 102020107016
(71) Anmelder: MEKRA Lang GmbH & Co. KG, 91465 Ergersheim (DE)
(72) Erfinder: Lang, Werner, 91465 Ergersheim (DE); Centmayer, Stefan, 91465 Ergersheim (DE); Wotschal, Alexander, 91593 Burgbernheim (DE)
(74) Vertreter: Kramer Barske Schmidtchen Patentanwälte PartG mbB

(57) **Zusammenfassung**

Ein Verfahren zum Verifizieren eines indirekten Sichtsystems stellt wenigstens eine Bildaufnahmeeinheit (10) mit wenigstens einem Bildsensor (20), wenigstens eine Bildbearbeitungseinheit (30), wenigstens eine Wiedergabeeinheit (40) und wenigstens einen Referenzgeber (50) an einer definierten Position an dem Fahrzeug (60), so dass der Referenzgeber (50) in einem Aufnahmebereich der Bildaufnahmeeinheit (10) liegt und auf dem Bildsensor (20) abgebildet wird, bereit. Der Referenzgeber (50) wird an einer Referenzgeber-Sollposition (51) auf dem Bildsensor (20) definiert. Bei dem Verfahren werden Bilddaten wenigstens eines Aufnahmebereichs (11) um das Fahrzeug (60) auf dem Bildsensor (20) aufgenommen und auf der Wiedergabeeinheit (40) wiedergegeben. Sodann wird eine Referenzgeber-Istposition (52) des Referenzgebers (50) auf dem Bildsensor (20) bestimmt und die Referenzgeber-Istposition (52) mit der Referenzgeber-Sollposition (51) dahingehend verglichen, ob die Referenzgeber-Istposition (52) gleich der Referenzgeber-Sollposition (51) ist oder nicht.

## Beschreibung

Die vorliegende Erfindung betrifft ein Verfahren zum Verifizieren eines indirekten Sichtsystems, genauer eines Aufnahmebereichs einer Bildaufnahmeeinheit oder eines Auslesebereichs eines Bildsensors der Bildaufnahmeeinheit, für ein Fahrzeug, insbesondere ein PKW oder ein Nutzfahrzeug, ein indirektes Sichtsystem, das zum Durchführen des Verfahrens ausgebildet ist und ein Fahrzeug, das das indirekte Sichtsystem enthält.

Bei Kraftfahrzeugen ist es gesetzlich vorgeschrieben, sogenannte Sichtfelder rund um das Fahrzeug für den Fahrer im Fahrbetrieb einsehbar zu machen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa und einigen außereuropäischen Ländern sind die Sichtfelder, die für einen Fahrer jederzeit zuverlässig einsehbar sein müssen, in der UN/ECE-Richtlinie Nr. 46 definiert. Weitere relevante Normen bzw. Richtlinien schließen beispielsweise die ISO 5721, ISO 5006, ISO 16505, ISO14401 und die EU 167/2013 ein. Neben den gesetzlich geforderten Sichtfeldern werden oftmals weitere Bereiche rund um das Fahrzeug, sogenannte Sichtbereiche, durch Einrichtungen zur indirekten Sicht einsehbar gemacht. Sichtbereiche können gesetzlich vorgeschriebene Sichtfelder enthalten.

Üblicherweise wird die Betrachtung der Sichtfelder mit einem oder mehreren Spiegeln ermöglicht. Jedoch haben Spiegel einige Nachteile. Zum Beispiel zeigen Spiegel dem Fahrer lediglich Objekte, die auf derselben Seite des Spiegels wie der Fahrer sind. Irgendein Objekt hinter einem Spiegel kann nur schwer durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sechs oder mehr Spiegel auf, die um die Außenseite des Fahrzeugs herum montiert sind, von denen die meisten konvex und verzerrt sind, was es schwierig für den Fahrer macht, auf alle relevanten Spiegel zur selben Zeit zu achten. Dennoch gibt es um diese Fahrzeuge trotz all der Spiegel üblicherweise immer noch blinde Flecke in den Sichtbereichen, d.h. den Bereichen, in denen keine Sichtfelder sind.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen wird kontinuierlich ein Bild erfasst und ermittelt bzw. bearbeitet und ggf. gespeichert. Die (Video-)Daten, die von einer Bilderfassungseinheit mit einer Bildsensoreinrichtung erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, dass die Sichtfelder jederzeit für den Fahrer permanent einsehbar sind. Gleichzeitig liefern Sichtsysteme eine verbesserte Nachtansicht, flexiblere, ergonomischere Anordnungsmöglichkeiten und die Möglichkeit, größere Sichtbereiche mit einer geringeren Verzerrung einzusehen.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon, oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt bzw. einsehbar gemacht. Dies gilt zumindest für als permanent einsehbar vorgeschriebene Sichtfelder für alle Fahrzeugzustände, bei denen der Zündschalter eingeschaltet ist und/oder bevorzugter Weise zum Beispiel gekoppelt an einen Sensor, der ein entsprechendes Signal empfängt, beispielsweise eine Türöffnungssignal oder ein Zündungseinschaltsignal.

Bei Kamerasystemen als Einrichtungen zur indirekten Sicht sind Kameras bzw. Bildaufnahmeeinheiten an der Fahrzeugkarosserie montiert. Die Kameras bzw. Bildaufnahmeeinheiten nehmen wenigstens einen seitlichen Bereich der Fahrzeugumgebung auf, der dem Bereich entspricht, den der Fahrer beim Blick in einen herkömmlichen Seitenspiegel oder Frontspiegel sehen würde. Genauer ist es bei Nutzfahrzeugen wünschenswert, auf der Fahrerseite und der Beifahrerseite jeweils einen ebenen und horizontalen Teil der Fahrbahn von bestimmter Breite einsehbar zu machen, der sich ab einer festgelegten Entfernung hinter den Augenpunkten des Fahrzeugführers bis zum Horizont erstreckt. Die Breite dieses Streifens entspricht bei der Verwendung von herkömmlichen Spiegeln in einer festgelegten Entfernung hinter den Augenpunkten des Fahrzeugführers dem Sichtfeld eines Weitwinkelspiegels (beispielsweise Sichtfeld IV wie in der ECE R46 definiert), in kürzerer Entfernung hinter den Augenpunkten des Fahrzeugführers dem Sichtfeld eines Hauptspiegels (beispielsweise Sichtfeld II wie in der ECE R46 definiert), dessen vorgegebene einsehbare Breite, d.h. Erstreckung in Fahrzeugquerrichtung, geringer als die des Sichtfelds des Weitwinkelspiegels ist. Die Bereiche eines Frontspiegels entsprechen beispielsweise dem Sichtfeld VI der UN/ECE R46.

Um insbesondere den Sichtbereich eines herkömmlichen Weitwinkelspiegels zuverlässig mit einer Kamera bzw. einer Bildaufnahmeeinheit aufnehmen zu können, sind die Kameras bzw. Bildaufnahmeeinheiten oft in einem bestimmten Abstand zur Fahrzeugkarosserie des Fahrzeugs montiert, wie beispielsweise an einem entfernten Ende eines mehrteiligen und klappbaren Kameraarms, der sich dadurch auszeichnet, dass seine Längserstreckung maßgeblich länger ist als seine Quererstreckung. Zudem kann es im Hinblick auf die Aufnahme der geforderten Sichtfelder vorteilhaft sein, solche Kameraarme an Stellen an der Fahrzeugkarosserie zu montieren, die sich von den üblichen Stellen unterscheiden, an denen herkömmliche Spiegel montiert werden. Es kann somit vorkommen, dass die Kamera an Stellen an der Fahrzeugkarosserie montiert wird, die der Fahrer während der Fahrt nicht einsehen kann.

Jedoch kann es, insbesondere bei solchen mehrteiligen Kameraarmen, vorkommen, dass die Kamera - z.B. durch Kollision des Kameraarms mit einem Objekt in der Fahrzeugumgebung oder durch Fremdeinwirkung (Verstellung des Kameraarms durch Dritte) - derart bzgl. des Fahrzeugs positioniert ist, dass ein oder mehrere fest definierte Aufnahmebereiche (wie beispielsweise die erwähnten gesetzlich vorgeschriebenen Sichtfelder II und IV oder ein oder mehrere individuell definierte Sichtbereiche) nicht mehr oder nicht mehr vollständig angezeigt werden. Handelt es sich dabei lediglich um eine kleine Abweichung zwischen den anzuzeigenden Aufnahmebereichen und den tatsächlich angezeigten Aufnahmebereichen, kann es vorkommen, dass der Fahrzeugführer, insbesondere wenn der Fahrzeugführer mit dem Fahrzeug nicht näher vertraut ist, diese Abweichung nicht bemerkt. Damit kann er mögliche Gefahrensituationen, die durch die Abweichung zwischen den anzuzeigenden Aufnahmebereichen und den tatsächlich angezeigten Aufnahmebereichen nur unzureichend oder gar nicht erfasst werden, zu spät oder gar nicht erkennen, was zu einer erhöhten Kollisionsgefahr des Fahrzeugs mit anderen Verkehrsteilnehmern oder Objekten in der Fahrzeugumgebung führt.

Aktuell können Sichtfelder von Kameras nur mittels eines sehr aufwändigen Prüfaufbaus verifiziert und ggf. eingestellt werden. In einem Fahrzeugprüfstand werden dazu Referenzziele aufgestellt, zwischen welchen das Fahrzeug positioniert wird, so dass die Referenzziele einen festen geometrischen Bezug zu dem Fahrzeug aufweisen. Die Ungenauigkeit der Fahrzeugposition und Toleranzen des Fahrzeuges (z.B. Bauteiltoleranzen, unterschiedliche Fahrzeugaufbauten, Messung mit oder ohne Fahrer, etc.) machen eine exakte Verifizierung schwierig bzw. aufwändig. Insbesondere für kleinere Fahrzeughersteller ist ein komplexer Verifiziervorgang nur schwer realisierbar, da hierdurch hohe Kosten entstehen und sich auch die Taktzeiten der Montage erhöhen. Auch ist dies für den Fahrer selbst nicht oder nur mit sehr erhöhtem Aufwand durchführbar, z.B. wenn eine solche Abweichung während des Betriebs des Fahrzeugs entsteht. Dieselben Nachteile ergeben sich auch im Zuge von Reparatur- bzw. Austauschvorgängen, wenn Bildaufnahmeeinheiten repariert oder ausgetauscht werden.

Ein Verfahren zum Bestimmen von Montagepositionen und/oder Ausrichtungen von mehreren Kameras eines Kamerasystems eines Fahrzeugs ist aus der WO 2017/174250 A1 bekannt. Ein Spiegelersatzsystem für ein Fahrzeug ist aus der EP 2 692 584 A1 bekannt. Eine Kalibriervorrichtung und ein Verfahren zur Ermittlung von Kalibrierdaten ist aus der DE 10 2018 111 776 A1 bekannt.

Davon ausgehend ist es Aufgabe der Erfindung, ein Verfahren zum Verifizieren eines indirekten Sichtsystems eines Fahrzeugs bereitzustellen, das es ermöglicht, eine Abweichung zwischen einem fest definierten, auf der Wiedergabeeinheit anzuzeigenden Bereich und einem tatsächlich auf der Wiedergabeeinheit angezeigten Bereich zu erkennen. Außerdem ist es Aufgabe der Erfindung, ein entsprechendes Sichtsystem bereitzustellen.

Diese Aufgabe wird mit einem Verfahren zum Verifizieren eines indirekten Sichtsystems für ein Kraftfahrzeug, insbesondere ein Personenkraftwagen (PKW) oder ein Nutzfahrzeug, mit den Merkmalen nach Anspruch 1, ein Sichtsystem für ein Kraftfahrzeug, insbesondere ein Nutzfahrzeug, das das Verfahren ausführen kann, mit den Merkmalen nach Anspruch 8 und ein Fahrzeug, das das indirekte Sichtsystem nutz, mit den Merkmalen nach Anspruchs 15 gelöst. Bevorzugte Ausführungsformen sind in den abhängigen Ansprüchen angegeben.

Der Erfindung liegt der Gedanke zugrunde, den Aufwand zu reduzieren, der bei einer herkömmlichen Verifizierung eines indirekten Sichtsystems mit einer exakten Ausrichtung der Referenzziele zu dem Fahrzeug einhergeht. Genauer wird bei der Verifizierung entweder der Aufnahmebereich der Bildaufnahmeeinheit oder der Auslesebereich des Bildsensors der Bildaufnahmeeinheit verifiziert. Dazu werden erfindungsgemäß die Referenzziele (außerhalb des Fahrzeugs, in bestimmten Umgebungen) durch sogenannte Referenzgeber ersetzt. Die Referenzgeber werden an der Fahrzeugkarosserie angebracht. Dabei wird zumindest ein Referenzgeber derart pro Fahrzeugseite vorgesehen, dass er bei eingeschalteter Bildaufnahmeeinheit im Aufnahmebereich der Bildaufnahmeeinheit liegt und entsprechend auf dem Bildsensor der Bilderfassungseinheit abgebildet wird. Der Referenzgeber wird dabei, wenn der Aufnahmebereich einem Sollaufnahmebereich entspricht, an einer Sollposition auf dem Bildsensor abgebildet bzw. definiert. Die Sollposition des Referenzgebers auf dem Bildsensor entspricht einer Position, die der Referenzgeber bei einer idealen Einstellung der Bildaufnahmeeinheit in dem Aufnahmebereich der Bildaufnahmeeinheit aufweisen muss, damit die geforderten bzw. gewünschten Sichtfelder dem Fahrer optimal angezeigt werden. Mit anderen Worten entspricht die Sollposition des Referenzgebers einer Position auf dem Bildsensor, an der der Referenzgeber bei bestmöglicher Einstellung des Aufnahmebereichs der Bildaufnahmeeinheit auf dem Bildsensor abgebildet wird, d.h. bei einer Einstellung, die die Anforderungen an die Sichtbarkeit der geforderten bzw. gewünschten Sichtfelder vollständig erfüllt.

Bei Verifizierung bzw. Überprüfung, ob das indirekte Sichtsystem so eingestellt ist, dass dessen Aufnahmebereich die Fahrzeugumgebung wie gefordert bzw. gewünscht aufnimmt, wird die Fahrzeugumgebung in Form von Bilddaten von einer Bildaufnahmeeinheit mit einem Bildsensor aufgenommen und die Istposition des Referenzgebers auf dem Bildsensor ermittelt. Die Istposition des Referenzgebers auf dem Bildsensor entspricht einer Position, die der Referenzgeber tatsächlich in der aktuell vorliegenden Einstellung der Bildaufnahmeeinheit in dem Aufnahmebereich der Bildaufnahmeeinheit aufweist. Nach Ermitteln der Istposition des Referenzgebers wird die Referenzgeber-Istposition von der Bildbearbeitungseinheit oder dem Fahrer mit der Referenzgeber-Sollposition verglichen. Bei einer Abweichung der Referenzgeber-Istpositon von der Referenzgeber-Sollposition liegt entweder eine Abweichung des Aufnahmebereichs der Bildaufnahmeeinheit oder des Auslesebereichs des Bildsensors der Bilderfassungseinheit von der idealen Einstellung des Aufnahmebereichs der Bildaufnahmeeinheit bzw. des Auslesebereichs des Bildsensors der Bildaufnahmeeinheit vor. Dadurch kann möglicherweise eine unzureichende, z.B. unvollständige, Aufnahme der geforderten bzw. gewünschten Sichtfelder vorliegen. Stimmt die Referenzgeber-Istpositon mit der Referenzgeber-Sollposition auf dem Bildsensor überein, liegt keine Abweichung des Aufnahmebereichs oder des Auslesebereichs der Bilderfassungseinheit von der idealen Einstellung des Aufnahmebereichs bzw. des Auslesebereichs der Bildaufnahmeeinheit vor und der Istaufnahmebereich der Bilderfassungseinheit entspricht dem Sollaufnahmebereich der Bilderfassungseinheit. Die Sichtfelder werden wie gefordert bzw. gewünscht angezeigt. Der Aufnahmebereich der Bildaufnahmeeinheit entspricht dem Bereich der Fahrzeugumgebung, den die Bildaufnahmeeinheit aufnimmt und der auf dem Bildsensor abgebildet wird. Der Auslesebereich des Bildsensors entspricht dem Bereich des Bildsensors, der für die Wiedergabe auf der Wiedergabeeinheit ausgewählt und dem Bildsensor entnommen wird.

Neben der exakten Übereinstimmung von Referenzgeber-Sollposition und Referenzgeber-Istposition zur Definition der idealen Einstellung des Aufnahmebereichs bzw. des Auslesebereichs der Bildaufnahmeeinheit, kann auch eine Lage der Referenzgeber-Istposition in einem definierten Bereich um die Referenzgeber-Sollposition für eine Anzeige der Sichtfelder wie gefordert oder gewünscht ausreichend sein. Es ist somit nicht zwingend notwendig, dass Referenzgeber-Sollposition und Referenzgeber-Istposition exakt übereinstimmen, so dass die gewünschten bzw. geforderten Sichtfelder zuverlässig auf der Wiedergabeeinheit abgebildet werden können. Das Vorsehen eines definierten Bereichs um die Referenzgebe-Sollposition herum kann entweder auf dem Bildsensor oder auf der Wiedergabeeinheit erfolgen und dient dem Ausgleich von mechanischen Toleranzen von System oder Fahrzeugkomponenten oder von Ungenauigkeiten bei der Bilderkennung.

Ein solches Verfahren zum Verifizieren eines indirekten Sichtsystems hat den Vorteil, dass der feste geometrische Bezug zwischen Referenzziel und Fahrzeug auf einfache Art und Weise durch die Anbringung des Referenzgebers unmittelbar an der Fahrzeugkarosserie ohne umständlichen Prüfaufbau mit mobilen Referenzzielen realisiert wird. Darüber hinaus ist es durch das erfindungsgemäße Verfahren nicht länger nötig, das Fahrzeug in einer geeigneten Prüfumgebung, wie z.B. einer Werkstatt, zu untersuchen. Vielmehr kann das Verfahren unabhängig von dem Standort des Fahrzeugs durchgeführt werden, vorzugsweise mitunter wiederholt und bevorzugt auch während des Betriebs des Sichtsystems, entweder automatisch (z.B. in festen Zeitabständen) oder bei Bedarf (z.B. wenn der Fahrer dies wünscht). Dies reduziert nicht nur das notwendige Equipment für den erforderlichen Prüfaufbau, sondern ist auch zeitsparend im Hinblick auf die Installation des Prüfaufbaus und die Überprüfung selbst und führt so zu einem unterbrechungsfreien und damit wirtschaftlichen Betrieb des indirekten Sichtsystems.

Vorzugsweise hat die Referenzgeber-Sollposition einen festen geometrischen Bezug zu wenigstens einem von der Bildaufnahmeeinheit aufgenommenen Sollsichtfeld. Das Sollsichtfeld kann ein gesetzlich vorgeschriebenes Sichtfeld, wie in der UN/ECE R46 definiert, oder ein von Hersteller bzw. Nutzer definiertes und damit gewünschtes Sichtfeld sein. Ein fester geometrischer Bezug zwischen der Referenzgeber-Sollposition und dem Sollsichtfeld stellt sicher, dass der Referenzgeber derart im Aufnahmebereich der Bilderfassungseinheit positioniert ist, dass das vorgeschriebene oder gewünschte Sichtfeld angezeigt wird, wenn sich die Referenzgeber-Istposition mit der Referenzgeber-Sollposition übereinstimmt. Dabei ist das vorgeschriebene oder gewünschte Sichtfeld von dem Typ des Fahrzeugs und dessen Geometrie abhängig.

Nach einer bevorzugten Ausführungsform wird wenigstens die Referenzgeber-Istposition auf der Wiedergabeeinheit abgebildet und das Vergleichen erfolgt auf der Wiedergabeeinheit. Vorzugsweise erfolgt das Vergleichen von Referenzgeber-Istposition und Referenzgeber-Sollposition auf der Wiedergabeeinheit durch manuelles Auflegen einer Maske, wie z.B. einer Folie, oder Abbilden eines digitalen Overlays mit fester Referenzgeber-Sollposition. Dabei legt ein Bediener, wie z.B. einer Werker, eine Maske, auf der die Referenzgeber-Sollposition gekennzeichnet ist, auf die Wiedergabeeinheit und vergleicht, ob die Referenzgeber-Istposition auf der Wiedergabeeinheit von der Referenzgeber-Sollposition auf der Maske überdeckt wird. Im Falle keiner Überdeckung erkennt der Bediener auf einfache Art und Weise, dass der Aufnahmebereich der Bildaufnahmeeinheit verstellt ist oder der Auslesebereich des Bildsensors verstellt ist und die geforderten oder gewünschten Sichtfelder möglicherweise nicht mehr vollständig angezeigt werden. Im Falle einer Überdeckung hingegen erkennt der Bediener auf einfache Art und Weise, dass der Aufnahmebereich der Bildaufnahmeeinheit oder der Auslesebereich des Bildsensors wie gefordert oder gewünscht eingestellt ist. Es ist auch denkbar, sowohl die Referenzgeber-Istposition als auch die Referenzgeber-Sollposition auf der Wiedergabeeinheit abzubilden. So kann ohne Auflegen einer Maske schnell und zuverlässig von dem Bediener erkannt werden, dass der Aufnahmebereich der Bildaufnahmeeinheit oder der Auslesebereich des Bildsensors verstellt ist und die geforderten oder gewünschten Sichtfelder möglicherweise nicht mehr vollständig angezeigt werden. Sowohl das Abbilden der Referenzgeber-Istposition als auch der Referenzgeber-Sollposition auf der Wiedergabeeinheit kann mitunter sogar während der Fahrt des Fahrzeugs erfolgen.

Vorteilhafter Weise erfolgt das Vergleichen in der Bildbearbeitungseinheit, z.B. durch einen bestimmten Rechenalgorithmus bzw. ein Computerprogramm zum Vergleichen der Referenzgeber-Istposition mit der Referenzgeber-Sollposition, das in der Bildbearbeitungseinheit gespeichert ist. Das Computerprogramm kann ein Grafikprogramm oder Bilderkennungsprogramm. Bei einem Grafikprogramm kann beispielsweise ein Overlay auf den Bildsensor projiziert werden, so dass die Bildbearbeitungseinheit erkennen kann, ob die Referenzgeber-Istposition mit der Referenzgeber-Sollposition übereinstimmt. Alternativ kann das Überprüfen der Übereinstimmung von Referenzgeber-Istposition und Referenzgeber-Sollposition mittels Bilderkennung erfolgen, bei der das von der Bildaufnahmeeinheit aufgenommene Bild segmentiert wird und durch Mustererkennung die einzelnen Bildsegmente analysiert werden. Das Vergleichen von Referenzgeber-Istposition und Referenzgeber-Sollposition durch die Bildbearbeitungseinheit hat den Vorteil, dass der Vergleich losgelöst von einem Handeln eines Bedieners wiederholt während des Betriebs des indirekten Sichtsystems und sogar während der Fahrt des Fahrzeugs durchgeführt werden kann, was einen zuverlässigeren und sichereren Vergleich ermöglicht und die Betriebssicherheit des Fahrzeugs erhöht, da rasch erkannt werden kann, wenn Ist- und Sollposition nicht mehr übereinstimmen.

Vorzugsweise werden bei dem Verfahren nicht nur die von Referenzgeber-Istposition und die Referenzgeber-Sollposition miteinander verglichen, sondern es wird auch gleichzeitig überprüft, ob das auf dem Bildsensor und damit der Wiedergabeeinheit abgebildete Istsichtfeld das geforderte oder gewünschte Sichtfeld, das heißt das Sollsichtfeld, ist. Das Vergleichen von Istsichtfeld und Sollsichtfeld erfolgt vorzugsweise durch Positionsprüfung, d.h. durch Vergleichen bestimmter dem Sollsichtfeld zugeordneter Punkte mit Punkten des Istsichtfelds. So kann auf einfache Art und Weise festgestellt werden, ob sich die Bildaufnahmeeinheit in Betriebsposition oder einer fest definierten Position befindet. Beispielsweise kann im Falle eines mehrteiligen und gelenkigen Kameraarms, der bei Kollision mit einem Hindernis oder durch Fremdeinwirkung Dritter eingeklappt werden kann, turnusmäßig, wie z.B. in bestimmten unregelmäßigen oder regelmäßigen Zeitintervallen (z.B. einmal täglich, einmal wöchentlich oder ein anderes Zeitintervall) oder nach Erkennen bestimmter Fahrzeugzustände (Zündung AN/AUS, Motorstart, Ankuppeln von Anhänger, wechselnde Bildeinstellungen, etc.), überprüft werden, ob der Kameraarm gegenüber der idealen Ausrichtung verstellt ist oder nicht oder ob sich der Kameraarm an vorgegebenen Position, wie z.B. einer Abklapposition, Parkposition, etc., befindet oder nicht. Es ist folglich kein separater Positionsschalter bzw. Abklappsensor im Kameraarm zur Überprüfung der Sichtfeld-Sichtbarkeit erforderlich. Das zusätzliche Vergleichen der Sichtfeldpositionen kann entweder stets oder vorzugsweise nach Bedarf durchgeführt werden, z.B. dann, wenn sich das Fahrzeug in einer entsprechenden Prüfeinrichtung mit einer Referenzsichtfeldanzeige befindet.

Vorteilhafterweise erfolgt das Vergleichen der Referenzgeber-Istposition und der Referenzgeber-Sollposition in der Bildbearbeitungseinheit in wenigstens einem Bildauswertebereich des Bildsensors. Der Bildauswertebereich entspricht einem Teil des gesamten Bildsensors, den die Bildbearbeitungseinheit bei Ausführung des Computerprogramms zum Vergleichen der Referenzgeber-Istposition als auch der Referenzgeber-Sollposition verwendet. Die Auswertung eines gewissen Teils des Bildsensors im Vergleich zur Auswertung des gesamten Bildsensors spart Rechenleistung und Rechenzeit. Es ist aber auch denkbar, den ganzen Bildsensor beim Vergleichen der Referenzgeber-Istposition als auch der Referenzgeber-Sollposition auszuwerten, d.h. zu berücksichtigen.

Vorzugweise enthält der Bildauslesebereich einen Bildauswertebereich. Der Bildauslesebereich ist der Bereich des Bildsensors, der dem Fahrer auf der Wiedergabeeinheit angezeigt wird. Nach einer erfindungsgemäßen Ausführungsform ist der Bildauslesebereich größer als der Bildauswertebereich. Nach einer weiteren vorteilhaften Ausführungsform enthält der Bildauslesebereich nicht den Bildauswertebereich, d.h. der Bildauswertebereich befindet sich auf dem Bildsensor an einer anderen Stelle als der Bildauslesebereich.

Vorteilhafterweise enthält das Verfahren den zusätzlichen Schritt des Ausgebens eines Signals an den Fahrer, wenn die Referenzgeber-Istposition ungleich der Referenzgeber-Sollposition ist. Das Signal kann ein akustisches, optisches und/oder haptisches Signal sein und kann dem Fahrer vorzugsweise wiederholt angezeigt werden. Ein akustisches Signal kann eines oder mehrere aus einem Warnton bzw. einem Alarm, einer Sprachnachricht, etc. sein. Ein optisches Signal kann eines oder mehrere aus einem optischen Warnhinweis, wie z.B. ein rotes Dreieck mit Ausrufezeichen, auf der Wiedergabeeinheit, im Armaturenbrett, in einem Headup-Display, etc. sein. Der optische Warnhinweis kann wiederkehrend erfolgen, wie z.B. ein Blinken, oder kann konstant angezeigt werden. Ein haptisches Signal kann ein Vibrieren des Lenkrads sein. es sind sämtliche Kombinationen an akustischen, optischen und/oder haptischen Signalen denkbar. Durch das bzw. die Signal(e) kann der Fahrer zeitnah, d.h. ohne merkliche zeitliche Verzögerung, erkennen, dass sich der Aufnahmebereich der Bilderkennungseinheit oder der Auslesebereich des Bildsensors geändert hat.

Nach einer bevorzugten Ausführungsform kann das Verfahren den zusätzlichen Schritt des Ausführens einer Kalibrieraktion enthalten, wenn die Referenzgeber-Istposition ungleich der Referenzgeber-Sollposition ist. Eine Kalibrieraktion ist notwendig, wenn die Referenzgeber-Istposition ungleich der Referenzgeber-Sollposition ist, um das gewünschte Sichtfeld wieder in Übereinstimmung mit dem Sollsichtfeld zu bringen. Unter einer Kalibrieraktion ist ein Einstellen bzw. Korrigieren eines Aufnahmebereichs der Bildaufnahmeeinheit oder eines Auslesebereichs des Bildsensors der Bildaufnahmeeinheit zu verstehen, so dass die Bildaufnahmeeinheit die geforderten bzw. gewünschten Sichtfelder erfasst und diese entsprechend auf dem Bildsensor und der Wiedergabeeinheit anzeigt werden. Durch Kalibrieren kann der Aufnahmebereich bzw. der Auslesebereich der Bilderfassungseinheit nicht nur verifiziert, d.h. auf Richtigkeit geprüft werden, sondern der Aufnahmebereich bzw. der Auslesebereich kann auch korrigiert werden, wenn erforderlich.

Die Ausgabe eines Signals und das Durchführen einer Kalibrieraktion können getrennt voneinander erfolgen oder in Kombination. Das heißt, es ist denkbar, dass ein Signal ausgegeben wird, um den Fahrer oder Werker auf eine Abweichung von Referenzgeber-Istposition und Referenzgeber-Sollposition hinzuweisen, aber keine Korrektur der Abweichung erfolgt. Alternativ kann auch kein Signal an den Fahrer oder Werker ausgegeben werden, sondern gleich nach Feststellen einer Abweichung von Referenzgeber-Istposition und Referenzgeber-Sollposition, eine Korrektur der Abweichung erfolgen. Weiter alternativ können die Vorgänge der Signalausgabe und der Korrektur auch unmittelbar hintereinander erfolgen.

Vorteilhafterweise enthält die Kalibrieraktion das Einstellen (Kalibrieren) des Aufnahmebereichs der Bildaufnahmeeinheit oder des Auslesebereichs des Bildsensors, so dass Referenzgeber-Istposition gleich Referenzgeber-Sollposition ist, d.h. dass die Referenzgeber-Istposition mit der Referenzgeber-Sollposition auf dem Bildsensor zusammenfällt, d.h. dass die Referenzgeber-Istposition und die Referenzgeber-Sollposition dieselbe Position auf dem Bildsensor aufweisen. So kann sichergestellt werden, dass der Fahrer die Fahrzeugumgebung zuverlässig einsehen kann.

Vorzugsweise erfolgt das Einstellen des Aufnahmebereichs der Bildaufnahmeeinheit oder des Auslesebereichs des Bildsensors manuell oder elektrisch durch Ausrichten wenigstens eines Teils der Bildaufnahmeeinheit und/oder digital durch Anpassen des wenigstens einen Bildauslesebereichs auf dem Bildsensor. Dabei kann das Ausrichten des wenigstens einen Teils der Bildaufnahmeeinheit manuell, z.B. durch Verstellung von Justageschrauben der Bildaufnahmeeinheit an der Karosserie des Fahrzeugs oder einer die Aufnahmeeinheit tragenden Tragstruktur erfolgen. Ein anderes Beispiel ist das Verstellen der Tragstruktur bzw. Teile der Tragstruktur zueinander. Alternativ kann das Ausrichten auch durch Verkleben der Aufnahmeeinheit in einer geeigneten Position bzw. Stellung an der Karosserie des Fahrzeugs oder einer die Aufnahmeeinheit tragenden Tragstruktur erfolgen. Weiter alternativ oder zusätzlich kann das Ausrichten wenigstens eines Teils der Bildaufnahmeeinheit elektrisch erfolgen, wie z.B. durch Verwendung eines Stellmotors, der z.B. die Optik der Bildaufnahmeeinheit automatisch verstellt. Das Anpassen des Bildauslesebereichs kann manuell über ein entsprechendes Eingabemedium, wie beispielsweise ein Joystick, Touchscreen, Türsteuermodul, Eingabeknöpfe am Monitor, etc. erfolgen, oder automatisch durch ein Kalibierprogramm, das in der Bildbearbeitungseinheit gespeichert ist. Alternativ oder zusätzlich kann das Anpassen des wenigstens einen Bildauslesebereichs digital durch Verändern des Bildauslesebereichs auf dem Bildsensor derart erfolgen, dass die Referenzgeber-Istposition mit der Referenzgeber-Sollposition übereinstimmt. Dies kann beispielsweise durch Verschieben des Auslesebereichs auf dem Bildsensor Pixel für Pixel erfolgen.

Die Kalibrieraktion erfolgt durch ein in der Bildbearbeitungseinheit empfangenes Signal. Vorzugsweise kann das Signal während des Betriebs des indirekten Sichtsystems empfangen werden. Das Signal kann eine manuelle Eingabe des Bedieners sein, wie z.B. der Fahrer oder ein Werker, oder kann mittels einer Software getaktet (Zeitabfolge, Muster) oder durch definierte Fahrzeugfunktionen (Zündung AN/AUS, Motorstart, Ankuppeln von Anhänger, wechselnde Bildeinstellungen, etc.) ausgegeben werden.

Das Sollsichtfeld ist vorzugsweise ein gesetzlich vorgeschriebenes Sichtfeld. Beispielsweise entspricht das Sollsichtfeld einem aus den Sichtfeldern, die in der UN/ECE R46 definiert sind, z.B. das Sichtfeld der Gruppe II oder IV. Gesetzlich vorgeschriebene Sichtfelder haben einen festen Bezug zum Augpunkt des Fahrers, wie er in der UN/ECE R46 definiert ist. Somit haben ist in diesem Fall auch ein fester geometrischer Bezug zwischen Augpunkt des Fahrers und dem Referenzgeber vorhanden, was die Zuverlässigkeit weiter erhöht, dass der Fahrer auch das Sichtfeld sieht, das er sehen soll.

Vorteilhafter Weise ist das indirekte Sichtsystem ein Spiegelersatzsystem, das gesetzlich vorgeschriebene Fahrzeugspiegel gänzlich ersetzt.

Gemäß einem weiteren Aspekt der Erfindung ist ein indirektes Sichtsystem eines Fahrzeugs derart ausgebildet, dass es das oben beschriebene Verfahren durchführen kann. Das indirekte Sichtsystem enthält wenigstens eine Bildaufnahmeeinheit mit einem Bildsensor, der zum Aufnehmen von Bilddaten wenigstens eines Aufnahmebereichs um das Fahrzeug ausgebildet ist, wenigstens eine Bildbearbeitungseinheit, die zum Bearbeiten der von der Bildaufnahmeeinheit aufgenommenen Bilddaten ausgebildet ist, und wenigstens eine Wiedergabeeinheit, die zum Wiedergeben der von der Bildbearbeitungseinheit bearbeiteten Bilddaten ausgebildet ist. Ferner enthält das indirekte Sichtsystem wenigstens einen Referenzgeber, der ausgebildet ist, dass er an einer definierten Position an dem Fahrzeug anbringbar ist, und, im an dem Fahrzeug montierten Zustand des indirekten Sichtsystems, in einem Aufnahmebereich der Bildaufnahmeeinheit liegt und auf dem Bildsensor abgebildet wird, wobei der Referenzgeber an der Referenzgeber-Sollposition auf dem Bildsensor abgebildet wird. Darüber hinaus enthält das indirekte Sichtsystem wenigstens eine Verifiziereinheit, die zum Definieren einer Referenzgeber-Sollposition und zum Bestimmen einer Referenzgeber-Istposition auf dem Bildsensor ausgebildet ist.

Als Bildaufnahmeeinheit kommen jegliche digitale Bilderfassungseinheiten in Betracht, die einen Bildsensor aufweisen und geeignet sind, die Fahrzeugumgebung in Form von Bilddaten aufzunehmen, wie z.B. Kameras mit einer eines CMOS- oder eine CCD-technologie. Als Bildbearbeitungseinheit kommt jede Steuereinheit (ECU) in Betracht, die zum Ausgeben und Empfangen von Signalen und Befehlen geeignet ist. Dabei kann die Bildbearbeitungseinheit ein einziges Bildbearbeitungsmodul oder mehrere Bildbearbeitungsmodule umfassen, die entweder im Sichtsystem an einer Position oder an verschiedenen Positionen angeordnet sind oder gar ganz oder teilweise auch im Fahrzeug positioniert sind. Als Wiedergabeeinheit kommt jeder Monitor, jedes Display, etc. in Betracht, das geeignet ist, die von der Bildbearbeitungseinheit aufgenommenen Bilddaten anzuzeigen, wie beispielsweise ein TFT-Monitor, ein LCD-Monitor, etc.

Vorzugsweise enthält das Sichtsystem weiter eine Kalibriereinheit, die ausgebildet ist zum Ausführen einer Kalibrieraktion. Somit ist es bei dem indirekten Sichtsystem nicht nur möglich zu bestimmen, ob die Referenzgeber-Istposition mit der Referenzgeber-Sollposition übereinstimmt oder nicht, sondern es ist auch möglich, im Falle einer Abweichung zwischen Referenzgeber-Istposition und Referenzgeber-Sollposition, die Abweichung zu korrigieren und so den Aufnahmebereich der Bildaufnahmeeinheit oder den Auslesebereich des Bildsensors derart einzustellen, dass Referenzgeber-Istposition und Referenzgeber-Sollposition auf dem Bildsensor und damit auch der Wiedergabeeinheit zusammenfallen, d.h. auf der gleichen Position oder wenigstens in einem definierten Bereich um die Referenzgeber-Sollposition herum liegen.

Vorteilhafte Weise enthält der Referenzgeber ein geometrisches Muster. Zum Beispiel kann der Referenzgeber ein Fadenkreuz, ein Dreieck, ein Kreis, ggf. einfarbig oder mehrfarbig, sein, der an geeigneter Stelle auf der Fahrzeugkarosserie angebracht werden kann. Alternativ oder zusätzlich kann der Referenzgeber auch ein Teil der Fahrzeugkarosserie, genauer der Fahrzeugkontur, sein, der eine spezielle Form zur Erkennung mittels Bilderkennung aufweist. Zum Beispiel kann der Referenzgeber einer Kante am Heck des Fahrzeugs, wie z.B. der Fahrerkabine oder des Aufbaus entsprechen. Alternativ kann der Referenzgeber auch ein Rad des Fahrzeugs oder ein Blinksignal des Abbiegeanzeigers sein. Alternativ kann die spezielle Form aber auch von einem Bediener auf der Wiedergabeeinheit erkannt werden.

Alternativ oder zusätzlich ist der Referenzgeber zum Lichtreflektieren ausgebildet. Beispielsweise kann der Referenzgeber ein Reflektor sein, ggf. als Aufkleber ausgebildet, oder kann Reflexionsbänder umfassen. Dadurch ist der Referenzgeber auch bei dunkle Fahrzeugumgebung bei Vorhandensein von Lichtquellen in der Fahrzeugumgebung auf dem Bildsensor oder auf der Wiedergabeeinheit zu erkennen.

Alternativ kann der Referenzgeber selbst eine Lichtquelle sein. Beispielsweise kann der Referenzgeber eine LED-, eine IR-Leuchte, ein Laser, eine Glühbirne, etc. sein. So ist der Referenzgeber auch bei Dunkelheit, wie nachts, im Tunnel oder bei schlechten Witterungsverhältnissen, auf dem Bildsensor oder auf der Wiedergabeeinheit zu erkennen, selbst wenn keine weitere Lichtquelle in der Fahrzeugumgebung vorhanden ist. Dabei kann die Lichtquelle entweder permanent leuchten, blinken oder kann sich lediglich nach Vorliegen eines bestimmten Ereignisses einschalten, wie beispielsweise bei Anschalten der Zündung, bei Ankuppeln eines Anhängers, etc. oder kann von dem Bediener (z.B. Fahrer oder Werker) manuell eingeschaltet werden.

Vorzugsweise kann die Lichtquelle dabei eine am Fahrzeug bestehende Leuchte sein, wie z.B. eine Fahrzeugbegrenzungsleuchte, eine Umrissleuchte, ein Rücklicht, eine Einstiegsleuchte, ein Blinker, etc. Es können sogar Leuchten am Fahrzeug als Referenzgeber verwendet werden, die nicht in Richtung Bildaufnahmeeinheit leuchten, aber dennoch im Aufnahmebereich der Bildaufnahmeeinrichtung liegen, wie beispielsweise eine Begrenzungsleuchte an einem Heckbereich des Fahrzeugs oder der Fahrerkabine oder des Fahrzeugaufbaus. In diesem Fall muss eine Öffnung in dem Leuchtengehäuse vorgesehen werden, durch die Licht in Richtung der Bildaufnahmeeinheit ausgesendet wird.

Bei Verwendung einer Lichtquelle als Referenzgeber kann die Lichtquelle ferner vorteilhafterweise zum Kenntlichmachen einer Verschmutzung der Optik der Bildaufnahmeeinheit auf der Wiedergabeeinheit ausgebildet sein. Durch Anstrahlen der Optik der Bildaufnahmeeinheit, wie z.B. der Linse, wird, sollte sich ein Fremdkörper auf dem optischen Element befinden, der Fremdkörper auf dem Bildsensor gut erkennbar abgebildet, d.h. deutlicher als ohne zusätzliche Beleuchtung. Es wird durch Bestrahlung des Fremdkörpers eine kontrastreichere bzw. eine hervorgehobene Abbildung des Fremdkörpers unmittelbar auf dem Bildsensor erzeugt und so eine etwaige Verschmutzung der Optik entweder automatisch auf dem Bildsensor durch Bilderkennung identifiziert oder auf der Wiedergabeeinheit dem Fahrer angezeigt.

Vorzugsweise enthält das Sichtsystem mindestens zwei Aufnahmeeinheiten. Jeder Aufnahmeeinheit ist jeweils ein Referenzgeber zugewiesen. Alternativ ist den Aufnahmeeinheiten ein gemeinsamer Referenzgeber zugewiesen.

Nach einer bevorzugten Ausführungsform ist das Sichtsystem ein Spiegel-Ersatz-System.

Gemäß noch einem weiteren Aspekt ist ein Fahrzeug mit dem oben beschriebenen Sichtsystem versehen, wobei die Bildaufnahmeeinheit in einem Halteelement angeordnet ist, welches sich von dem Fahrzeug weg erstreckt. Das Halteelement kann ein Kameraarm sein, der sich dadurch auszeichnet, dass er eine wesentlich größere Erstreckung in Längsrichtung als in Querrichtung aufweist. Vorzugsweise ist die Bildaufnahmeeinheit an einem von dem Fahrzeug entfernten Ende des Kameraarms angeordnet, um so auf geeignete Weise die Fahrzeugumgebung erfassen zu können. Das Fahrzeug ist vorzugsweise ein PKW oder ein Nutzfahrzeug. Als Nutzfahrzeug kommen eine Lastkraftwagen (LKW) in Frage, der eine Fahrerkabine und einen Aufbau aufweist, der vorzugsweise starr ist, wie z.B. ein Metallaufbau. Alternativ kann auch ein LKW mit Fahrerkabine und Anhänger von dem Begriff "Fahrzeug" umfasst sein.

Vorteilhafterweise ist Fahrzeug ein Nutzfahrzeug und der Referenzgeber ist an einer Außenseite des Fahrzeugführerhauses angeordnet. Alternativ kann der Referenzgeber auch an einer Seitenflanke des Fahrzeugs angebracht sein oder der Referenzgeber kann an einer Frontbeplankung des Fahrzeugs angebracht sein. Dies ist vor allem dann vorteilhaft, wenn die ECE/UN R46 angewendet wird. Weiter alternativ kann der Referenzgeber an einem Fahrzeugaufbau des Fahrzeugs angebracht sein, z.B. einem Kastenaufbau oder einer Seitenbordwand.

Der Referenzgeber kann unmittelbar an dem Fahrzeug angeordnet sein oder kann über ein Referenzgeber-Halteelement an dem Fahrzeug angebracht sein. Das Halteelement kann ein von dem Fahrzeug im montierten Zustand auskragendes Bauteil sein, an dessen vom Fahrzeug entfernten Ende der Referenzgeber montiert ist, beispielsweise aufgeklebt oder verschraubt.

Nach einer bevorzugten Ausführungsform ist der Referenzgeber lösbar mit dem Fahrzeug verbunden. Dabei wird der Referenzgeber nur vorrübergehend für die Kalibrieraktion angebracht und anschließend wieder entfernt, wie z.B. über einen Magnetfuß, eine Anschraubung, eine Einhängeverbindung, etc. Alternativ kann der Referenzgeber aber auch unlösbar mit dem Fahrzeug verbunden sein, so dass er ständig am Fahrzeug vorhanden ist, wie z.B. durch einen Aufkleber, eine Bemalung oder entsprechende Lackierung, eine Fahrzeugleuchte, ein separates Bauteil, eine Fahrzeugreferenz mit Kontrast zur Umgebung, wie z.B. die Endkante des Fahrerhauses, der Radkasten, etc.

Nachfolgend wird die Erfindung beispielhaft anhand der beigefügten Figuren beschrieben, in denen:
- Fig. 1: einen schematischen Aufbau eines Sichtsystems zeigt, das das erfindungsgemäße Verfahren ausführen kann;
- Fig. 2: eine Draufsicht auf ein Fahrzeug mit einer Bildaufnahmeeinheit und einem Sollsichtfeld zeigt;
- Fig. 3: eine Seitenansicht eines Fahrzeugs mit einer Bildaufnahmeeinheit und einem Sollsichtfeld zeigt;
- Fig. 4: einen Wiedergabeeinheit zeigt, die die in den Fig. 2 und 3 gezeigte Fahrzeugumgebung anzeigt;
- Fig. 5: einen Bildsensor zeigt, auf dem eine Referenzgeber-Istposition und eine Referenzgeber-Sollposition sowie ein Istsichtfeld und ein Sollsichtfeld gezeigt sind;
- Fig. 6: eine Wiedergabeeinheit zeigt, die die in den Fig. 2 und 3 gezeigte Fahrzeugumgebung anzeigt mit einem Referenzgeber an einer Fahrzeugseitenflanke;
- Fig. 7: eine Wiedergabeeinheit zeigt, die die in Fig. 6 gezeigte Fahrzeugumgebung mit einem Referenzgeber jeweils an einer Sollposition und an einer Istposition und ein entsprechendes Istsichtfeld und Sollsichtfeld zeigt; und
- Fig. 8: ein Flussdiagramm zeigt, das die wesentlichen Schritte des erfindungsgemäßen Verfahrens zur Verifizierung bzw. Kalibrierung eines indirekten Sichtsysteme enthält.

### Aspekte

1. Verfahren zum Verifizieren eines indirekten Sichtsystems (1) eines Fahrzeugs (60), enthaltend
   Bereitstellen (S10) wenigstens einer Bildaufnahmeeinheit (10), die wenigstens einen Bildsensor (20) aufweist und zum Aufnehmen von Bilddaten wenigstens eines Aufnahmebereichs (11) um das Fahrzeug (60) ausgebildet ist,
   Bereitstellen (S10) wenigstens einer Bildbearbeitungseinheit (30), die zum Bearbeiten der von der Bildaufnahmeeinheit (10) aufgenommenen Bilddaten ausgebildet ist,
   Bereitstellen (S10) wenigstens einer Wiedergabeeinheit (40), die zum Wiedergeben der von der Bildbearbeitungseinheit (30) bearbeiteten Bilddaten ausgebildet ist,
   Bereitstellen (S10) wenigstens eines Referenzgebers (50) an einer definierten Position an dem Fahrzeug (60), so dass der Referenzgeber (50) in dem Aufnahmebereich (11) der Bildaufnahmeeinheit (10) liegt und auf dem Bildsensor (20) abgebildet wird, wobei der Referenzgeber (50) an einer Referenzgeber-Sollposition (51) auf dem Bildsensor (20) definiert ist (S20),
   Aufnehmen (S30) der Bilddaten des wenigstens einen Aufnahmebereichs (11) um das Fahrzeug (60) auf dem Bildsensor (20), die den Referenzgeber (50) enthalten,
   Wiedergeben (S40) wenigstens eines aus den Bilddaten des Bildsensors (20) ausgelesenen Bildauslesebereichs (22) auf der Wiedergabeeinheit (40),
   Bestimmen (S50) einer Referenzgeber-Istposition (52) des Referenzgebers (50) auf dem Bildsensor (20), und
   Vergleichen (S60, S70) der Referenzgeber-Istposition (52) und der Referenzgeber-Sollposition (51) dahingehend, ob die Referenzgeber-Istposition (52) gleich der Referenzgeber-Sollposition (51) ist oder nicht.
2. Verfahren nach Aspekt 1, wobei die Referenzgeber-Sollposition (51) einen festen geometrischen Bezug (73) zu wenigstens einem von der Bildaufnahmeeinheit (10) aufgenommenen Sollsichtfeld (51) hat.
3. Verfahren nach Aspekt 1 oder 2, wobei wenigstens die Referenzgeber-Istposition (52) auf der Wiedergabeeinheit (40) abgebildet wird und das Vergleichen (S60, S70) auf der Wiedergabeeinheit (40) erfolgt.
4. Verfahren nach Aspekt 1 oder 2, wobei das Vergleichen (S60, S70) in der Bildbearbeitungseinheit (30) erfolgt.
5. Verfahren nach Aspekt 3 oder 4, sofern rückbezogen auf Aspekt 2, wobei das Verfahren den zusätzlichen Schritt des Vergleichens eines Istsichtfelds (72) und eines Sollsichtsfelds (71) enthält.
6. Verfahren nach Aspekt 4 oder 5, wobei das Vergleichen der Referenzgeber-Istposition (52) und der Referenzgeber-Sollposition (51) durch die Bildbearbeitungseinheit (30) in wenigstens einem Bildauswertebereich (21) des Bildsensors (20) erfolgt.
7. Verfahren nach Aspekt 6, wobei der Bildauslesebereich (22) den Bildauswertebereich (21) enthält.
8. Verfahren nach einem der vorhergehenden Aspekte, wobei das Verfahren den zusätzlichen Schritt des Ausgebens eines Signals an den Fahrer enthält, wenn die Referenzgeber-Istposition (52) ungleich der Referenzgeber-Sollposition (51) ist.
9. Verfahren nach einem der vorhergehenden Aspekte, wobei das Verfahren den zusätzlichen Schritt des Ausführens einer Kalibrieraktion enthält, wenn die Referenzgeber-Istposition (52) ungleich der Referenzgeber-Sollposition (51) ist.
10. Verfahren nach Aspekt 9, wobei die Kalibrieraktion das Einstellen des Aufnahmebereichs (11) der Bildaufnahmeeinheit (10) enthält, so dass Referenzgeber-Istposition (52) gleich Referenzgeber-Sollposition (51) ist.
11. Verfahren nach Aspekt 10, wobei das Einstellen des Aufnahmebereichs (11) der Bildaufnahmeeinheit (10) durch Ausrichten wenigstens eines Teils der Bildaufnahmeeinheit (10) und/oder durch Anpassen des wenigstens einen Bildauslesebereichs (22) auf dem Bildsensor (20) erfolgt.
12. Verfahren nach einem der Aspekte 9 bis 11, wobei die Kalibrieraktion durch ein von der Bildbearbeitungseinheit (30) empfangenes Signal erfolgt.
13. Verfahren nach einem der Aspekte 2 bis 12, wobei das Sollsichtfeld (71) ein gesetzlich vorgeschriebenes Sichtfeld ist.
14. Verfahren nach einem der vorhergehenden Aspekte, wobei das indirekte Sichtsystem (1) ein Spiegelersatzsystem ist.
15. Indirektes Sichtsystem (1) eines Fahrzeugs (60), das ausgebildet ist zum Durchführen des Verfahrens nach einem der Aspekte 1 bis 14, enthaltend
   die wenigstens eine Bildaufnahmeeinheit (10), die einen Bildsensor (20) aufweist und zum Aufnehmen von Bilddaten wenigstens eines Aufnahmebereichs (11) um das Fahrzeug (60) ausgebildet ist,
   die wenigstens eine Bildbearbeitungseinheit (30), die zum Bearbeiten der von der Bildaufnahmeeinheit (10) aufgenommenen Bilddaten ausgebildet ist,
   die wenigstens eine Wiedergabeeinheit (40), die zum Wiedergeben der von der Bildbearbeitungseinheit (30) bearbeiteten Bilddaten ausgebildet ist,
   die wenigstens einen Referenzgeber (50), der ausgebildet ist, dass er an einer definierten Position an dem Fahrzeug (60) anbringbar ist, und, in dem an dem Fahrzeug (60) montierten Zustand des indirekten Sichtsystems (1), in einem Aufnahmebereich (11) der Bildaufnahmeeinheit (10) liegt und auf dem Bildsensor (20) abgebildet wird, wobei der Referenzgeber (50) an der Referenzgeber-Sollposition (51) auf dem Bildsensor (20) abgebildet wird,
   wenigstens eine Verifiziereinheit, die zum Definieren einer Referenzgeber-Sollposition (51) und Bestimmen einer Referenzgeber-Istposition (52) auf dem Bildsensor (20) ausgebildet ist.
16. Indirektes Sichtsystem (1) nach Aspekt 15, wobei das Sichtsystem weiter eine Kalibriereinheit enthält, die ausgebildet ist zum Ausführen einer Kalibrieraktion.
17. Indirektes Sichtsystem (1) nach Aspekt 15 oder 16, wobei der Referenzgeber (50) ein geometrisches Muster enthält.
18. Indirektes Sichtsystem (1) nach einem der Aspekte 15 bis 17, wobei der Referenzgeber (50) Licht reflektiert.
19. Indirektes Sichtsystem (1) nach einem der Aspekte 15 bis 17, wobei der Referenzgeber (50) eine Lichtquelle ist.
20. Indirektes Sichtsystem (1) nach Aspekt 19, wobei die Lichtquelle eine am Fahrzeug (60) bestehende Leuchte ist.
21. Indirektes Sichtsystem (1) nach einem der Aspekte 19 oder 20, wobei die Lichtquelle ausgebildet ist zum Kenntlichmachen einer Verschmutzung der Optik der Bildaufnahmeeinheit (10) auf der Wiedergabeeinheit (40).
22. Indirektes Sichtsystem (1) nach einem der Aspekte 15 bis 21, ferner enthaltend mindestens zwei Aufnahmeeinheiten, wobei jeder Aufnahmeeinheit jeweils ein Referenzgeber (50) zugewiesen ist oder wobei den Aufnahmeeinheiten ein gemeinsamer Referenzgeber (50) zugewiesen ist.
23. Indirektes Sichtsystem (1) nach einem der Aspekte 15 bis 22, wobei das Sichtsystem (1) ein Spiegel-Ersatz-System ist.
24. Fahrzeug (60) mit einem indirekten Sichtsystem nach einem der Aspekte 15 bis 23, wobei die Bildaufnahmeeinheit (10) in einem Halteelement angeordnet ist, welches sich von dem Fahrzeug (60) weg erstreckt.
25. Fahrzeug (60) nach Aspekt 24, wobei der Referenzgeber (50) an einer Außenseite des Fahrzeugführerhauses angeordnet ist.
26. Fahrzeug (60) nach Aspekt 24, wobei der Referenzgeber (50) an einer Seitenflanke des Fahrzeugs (60) angebracht ist.
27. Fahrzeug (60) nach Aspekt 24, wobei das Fahrzeug (60) ein Nutzfahrzeug ist und der Referenzgeber (50) an einer Frontbeplankung des Fahrzeugs (60) angebracht ist.
28. Fahrzeug (60) nach Aspekt 24, wobei der Referenzgeber (50) an einem Fahrzeugaufbau des Fahrzeugs (60) angebracht ist.
29. Fahrzeug (60) nach einem der Aspekte 24 bis 28, wobei der Referenzgeber (50) über ein Referenzgeber-Halteelement an dem Fahrzeug (60) angebracht ist.
30. Fahrzeug (60) nach einem der Aspekte 24 bis 29, wobei der Referenzgeber (50) lösbar mit dem Fahrzeug (60) verbunden ist.

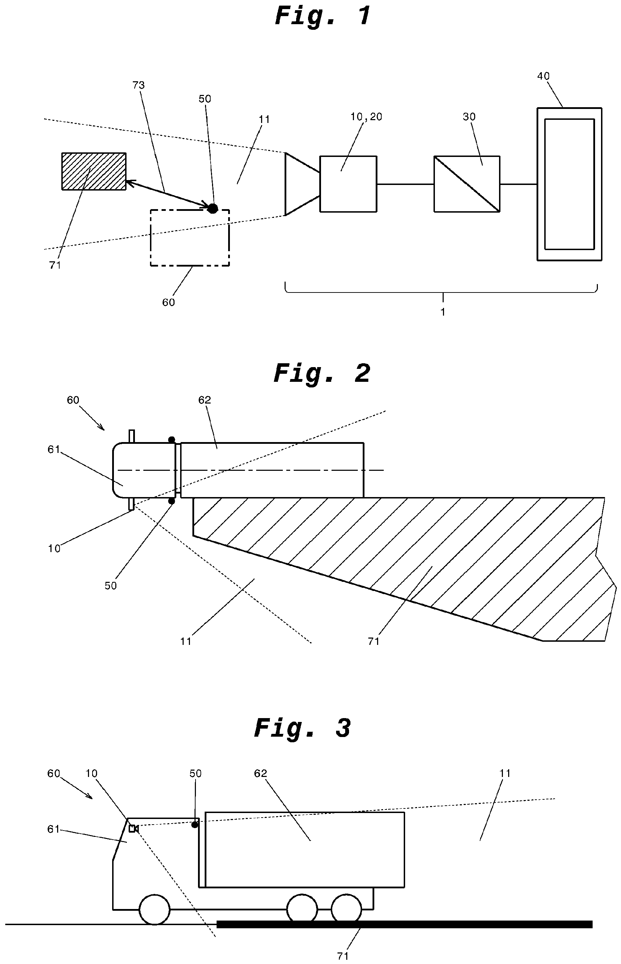

Fig. 1 zeigt eine schematische Ansicht eines indirekten Sichtsystems 1, das das erfindungsgemäße Verfahren ausführen kann. Das Sichtsystem 1 enthält eine Bildaufnahmeeinheit 10, wie beispielsweise eine Kamera, mit einem Bildsensor 20, eine Bildbearbeitungseinheit 30, wie beispielsweise eine ECU, und eine Wiedergabeeinheit 40, wie beispielsweise einen Monitor. Das in Fig. 1 gezeigte Sichtsystem 1 ist in einer idealen Fahrumgebung gezeigt, in der ein Fahrzeug 60 (siehe Rechteck, das mit einer Zwei-Punkt-Strich-Linie gezeigt ist) und ein dem Fahrzeug 60 zugeordnetes Sollsichtfeld 71 (siehe schraffiertes Rechteck) zu sehen sind. Eine ideale Fahrumgebung bedeutet vorliegend, dass das Sollsichtfeld 71 einem Fahrer (nicht gezeigt) des Fahrzeugs 60 wie gefordert auf der Wiedergabeeinheit 40 angezeigt wird. Die Vorwärtsfahrtrichtung des in Fig. 1 gezeigten Fahrzeugs 60 verläuft in Fig. 1 nach rechts, die Rückwärtsfahrrichtung verläuft in Fig. 1 nach links. Die Aufnahmeeinheit 10 weist einen Aufnahmebereich 11 auf, der sich bei der Kamera 10 beginnend zur Rückseite des Fahrzeugs 60 auffächert bzw. aufweitet.

Ferner enthält das Sichtsystem 1 einen Referenzgeber 50. Der Referenzgeber 50 ist in Fig. 1 an einer linken Außenseite eines schematisch gezeigten Fahrzeugs 60 angebracht.

Das Sollsichtfeld 71 ist schräg hinter dem Fahrzeug auf einer linken Seite des Fahrzeugs 60 angeordnet und kann ein gesetzlich gefordertes Sichtfeld sein, wie beispielsweise ein Sichtfeld der Gruppe II oder IV, wie in der UN/ECE R46 gefordert. Das in Fig. 1 gezeigte Sollsichtfeld 71 weist einen festen geometrischen Bezug 73 zu dem Referenzgeber 50 auf. Das heißt, die Anordnung des Sollsichtfelds 71 in Bezug auf den Referenzgeber 50 ist bekannt und in der idealen Fahrumgebung auch stets unverändert.

Fig. 2 zeigt eine Draufsicht auf ein Fahrzeug 60, vorliegend ein Lastkraftwagen (LKW). Das Fahrzeug 60 weist eine Fahrerkabine 61 und einen Fahrzeugaufbau 62 (z.B. einen Kipper, Kühler, einen Koffer, einen Autotransporter, etc.) auf. Die Vorwärtsfahrrichtung des LKW 60 verläuft in Fig. 2 nach links, während die Rückwärtsfahrrichtung des LKW 60 in Fig. 2 nach rechts verläuft. Die nachfolgende Beschreibung der Fahrumgebung auf der linken Seite des LKW 60 gilt gleichermaßen für die rechte Seite des LKW 60, auch wenn nicht gezeigt.

Der LKW weist an der linken Seite der Zugmaschine, genauer der Fahrerkabine, eine Bildaufnahmeeinheit 10 auf. Die Bildaufnahmeeinheit 10 erfasst die Fahrzeugumgebung links neben und hinter dem LKW 60 und weist einen Aufnahmebereich 11 auf, der sich in einer horizontalen, zu einer Fahrbahnoberfläche parallelen Ebene von der Bilderfassungseinheit 10 nach hinten des LKW 60 auffächert. Der Aufnahmebereich 11 der Bilderfassungseinheit 10 wird daher im Folgenden Aufnahmekegel 11 genannt.

Links neben dem LKW 60 ist das in Fig. 1 schematisch gezeigte Sollsichtfeld 71 angeordnet. Das Sollsichtfeld 71 erstreckt in einem vorgegebenen Abstand hinter dem Augpunkt des Fahrers (nicht gezeigt) nach hinten des LKW 60 und weitet sich in einem bestimmten Winkel nach hinten auf. Vorliegend entspricht der Sollsichtfeld 71 dem Sichtfeld II der UN/ECE R46, d.h. einem Hauptspiegelsichtfeld. Jedoch kann das Sollsichtfeld auch jedem anderen Sichtfeld entsprechen, entweder einem gesetzlich geforderten Sichtfeld oder einem gewünschten, d.h., z.B. von Hersteller oder Nutzer vorgegebenen Sichtfeld.

An einer hinteren Kante der Fahrerkabine 61 des LKW 60 ist der in Fig. 1 gezeigte Referenzgeber 50 angeordnet. Wie in Fig. 2 gezeigt befindet sich der Referenzgeber 50 in dem Aufnahmekegel 11 der Bildaufnahmeeinheit 60. Der Referenzgeber 50 kann auch an dem Fahrzeugaufbau 62, sofern es sich um einen starren Aufbau handelt, angebracht sein.

Fig. 3 zeigt die Fahrumgebung aus Fig. 2 in einer Seitenansicht. Wie in Fig. 3 gezeigt, weitet sich der Aufnahmebereich 11 der Bildaufnahmeeinrichtung 10 nicht nur in einer horizontalen, zu einer Fahrbahnoberfläche parallelen Ebene von der Bilderfassungseinheit 10 nach hinten des LKW 60 auf, sondern weitet sich auch in einer zu der Fahrbahn senkrechten, zu linken LKW-Fahrzeugaußenwand parallelen Ebene nach hinten auf. Das Sollsichtfeld 71 ist in Fig. 3 als dicke schwarze Linie in der Ebene der Fahrbahnoberfläche gezeigt. Wie in Fig. 3 ferner gezeigt, ist der Referenzgeber an einer oberen hinteren linken Ecke der Zugmaschine des LKW 60 angeordnet und wird von dem Aufnahmekegel 11 der Bildaufnahmeeinheit 10 erfasst.

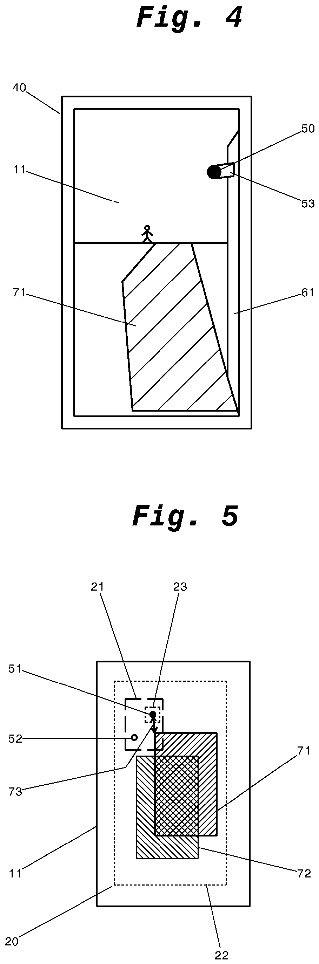

Fig. 4 zeigte die in Fig. 1 gezeigte Wiedergabeeinheit 40. In Fig. 4 zeigt die Wiedergabeeinheit 40 die in den Fig. 2 und 3 gezeigte ideale Fahrumgebung. Die in Fig. 4 schematisch dargestellte Person ist in Fig. 2 und 3 nicht gezeigt. In Fig. 4 ist aus Gründen der Übersichtlichkeit nur die Zugmaschine aus Fig. 2 und 3 dargestellt. Wie Fig. 4 zu entnehmen ist, ist der Referenzgeber 50 über ein Referenzgeber-Halteelement 53 an der Zugmaschine des LKW 60 angebracht. Genauer ist der Referenzgeber 50 an einem von dem Fahrzeug entfernten Ende des von der Zugmaschine des LKW 60 auskragenden Referenzgeber-Halteelements 53 angebracht. Der Referenzgeber 50 kann ein Licht reflektierendes Element oder eine nach vorne des LKW 60 Licht aussendende Leuchte sein.

Fig. 5 zeigt einen Bildsensor 20 wie er in der in Fig. 1 gezeigten Bildaufnahmeeinheit 10 vorhanden ist und schematisch einen Verifiziervorgang, der von der Bildbearbeitungseinheit 30 ausgeführt wird und bei dem eine Verifizierung des Aufnahmebereichs 11 der Bilderfassungseinheit 10 oder eines Auslesebereichs 22 des Bildsensors 20 durch Vergleichen einer Referenzgeber-Istposition 52 und einer Referenzgeber-Sollposition 51 auf dem Bildsensor 20 erfolgt.

Der Bildsensor 20 weist eine rechteckige Form mit einer längeren Erstreckung in der Oben-Unten-Erstreckung als in der der Links-Rechts-Erstreckung in Fig. 5 auf. Auf dem Bildsensor 20 wird die gesamte sich in dem Aufnahmekegel 11 befindliche Fahrzeugumgebung abgebildet. Ein Teil der auf dem Bildsensor 20 anzeigten Bilddaten wird als Bildauslesebereich 22 (siehe Rechteck mit fein gestrichelter Linie) aus dem Bildsensor 22 ausgelesen und zur Anzeige auf der Wiedergabeeinheit 40 an diese übermittelt. Es ist auch möglich, die Bilddaten des gesamten Bildsensors 20 zur Anzeige auf der Wiedergabeeinheit 40 an diese zu übermitteln.

In einer linken oberen Ecke des Bildauslesebereichs 22 ist ein Bildauswertebereich 21 angeordnet (siehe Rechteck mit grob gestrichelter Linie). In dem Bildauswertebereich 21 ist eine Referenzgeber-Sollposition 51 gekennzeichnet. Die Referenzgeber-Sollposition 51 auf dem Bildsensor 20 entspricht der Position auf dem Bildsensor 20, an der der Referenzgeber 50 abgebildet werden soll, wenn sich der Aufnahmebereich 11 der Bildaufnahmeeinheit 10 in der geforderten bzw. gewünschten Einstellung befindet. In der geforderten bzw. gewünschten Einstellung des Aufnahmebereichs 11 der Bildaufnahmeeinheit 10 sieht der Fahrer die geforderte bzw. gewünschte Fahrzeugumgebung auf der Wiedergabeeinheit 40, wie z.B. das geforderte bzw. gewünschte Sollsichtfeld 71.

In dem Bildauswertebereich 21 ist ferner eine Referenzgeber-Istposition 52 abgebildet. Die Referenzgeber-Istposition 52 auf dem Bildsensor 20 entspricht der Position auf dem Bildsensor 20, an der der Referenzgeber 50 tatsächlich abgebildet wird, wenn die Bildaufnahmeeinheit 10 die Fahrzeugumgebung aufnimmt. Wie in Fig. 5 gezeigt ist, liegt die Referenzgeber-Istposition 52 nicht an derselben Position wie die Referenzgeber-Sollposition 51. Da die Referenzgeber-Sollposition 51 einen festen geometrischen Bezug 73 zu dem Sollsichtfeld 71 hat, wird auch ein Istsichtfeld 72 gegenüber dem Sollsichtfeld 71 versetzt auf dem Bildsensor 20 der Bildaufnahmeeinheit 10 angezeigt, und der Fahrer kann in diesem Fall die geforderte bzw. gewünschte Fahrzeugumgebung nur teilweise sehen (siehe überlappender Bereich des Sollsichtfelds 71 und des Istsichtfeld 72 in Fig. 5) auf der Wiedergabeeinheit 40.

Die Abweichung der Referenzgeber-Istposition 52 und der Referenzgeber-Sollposition 51 auf dem Bildsensor 20 wird bei der in Fig. 5 gezeigten Ausführungsform durch ein geeignetes in der Bildbearbeitungseinheit 30 gespeichertes Computerprogramm, wie. z.B. durch Bilderkennung, ermittelt und dem Fahrer durch ein Signal, wie beispielsweise durch einen Warnton oder eine entsprechende Anzeige auf der Wiedergabeeinheit 40 oder dem Armaturenbrett, angezeigt werden. Der Fahrer kann dann z.B. die Abweichung von Referenzgeber-Istposition 52 zu Referenzgeber-Sollposition 51 manuell durch Einstellung der Bilderfassungseinheit 10 korrigieren, so dass Referenzgeber-Istposition 52 gleich Referenzgeber-Sollposition 51 ist. In einem weiteren oder einem zu der Signalausgabe alternativen Schritt kann aber auch die Bildbearbeitungseinheit 30 den Fehler in der Abbildung auf dem Bildsensor, d.h., dass die Referenzgeber-Istposition 52 ungleich der Referenzgeber-Sollposition 51 ist, selbst korrigieren und das indirekte Sichtsystem somit kalibrieren. Eine Kalibrierung des Aufnahmebereichs 11 der Bilderfassungseinheit 10 durch die Bildbearbeitungseinheit 30 kann automatisch erfolgen. Allgemein wird die Bestimmung, ob die Referenzgeber-Istposition 52 gleich der Referenzgeber-Sollposition 51 ist, entweder auf ein Signal hin, wie beispielsweise einen entsprechenden Befehl des Fahrers, auf ein Fahrzeugereignis hin oder durch ein entsprechendes Kalibrierprogramm gestartet. Ein Fahrzeugereignis kann das Starten des Fahrzeugs, das Einschalten der Zündung, das Ankuppeln eines Anhängers, etc. sein. Ein Kalibrierprogramm führt durch eine entsprechende Software getaktet ein Bestimmen von Referenzgeber-Istposition 52 durch, vergleicht Referenzgeber-Istposition 52 mit Referenzgeber-Sollposition 51 und korrigiert die Referenzgeber-Istposition 52 selbstständig so, dass sie mit der Referenzgeber-Sollposition 51 übereinstimmt.

Wie ferner in Fig. 5 gezeigt ist, ist um die Referenzgeber-Sollposition 51 ein Referenzgeber-Sollbereich 23 definiert. Der Referenzgeber-Sollbereich 23 legt ein Gebiet auf dem Bildsensor 11 fest, in dem der Referenzgeber 50 zumindest liegen muss, um die vorgeschriebenen bzw. gewünschten Sichtfelder mit der Bildaufnahmeeinheit 10 aufnehmen zu können, auf dem Bildsensor 11 abbilden zu können und auf der Wiedergabeeinheit 40 anzeigen zu können. Der Referenzgeber-Sollbereich 23 wird von dem Fahrzeughersteller oder dem Sichtsystemhersteller vorab definiert und umfasst üblicherweise einen Bereich symmetrisch um die Referenzgeber-Sollposition 51. Auch eine nicht-symmetrische Erstreckung des Referenzgeber-Sollbereichs 23 um die Referenzgeber-Sollposition 51 ist denkbar. Es kann demnach auch ausreichend sein, dass die Referenzgeber-Istposition 52 in den Referenzgeber-Sollbereich 23 verschoben wird, um das Sichtsystem 1 zu kalibrieren, nicht aber exakt auf der Referenzgeber-Sollposition 51 liegen muss.

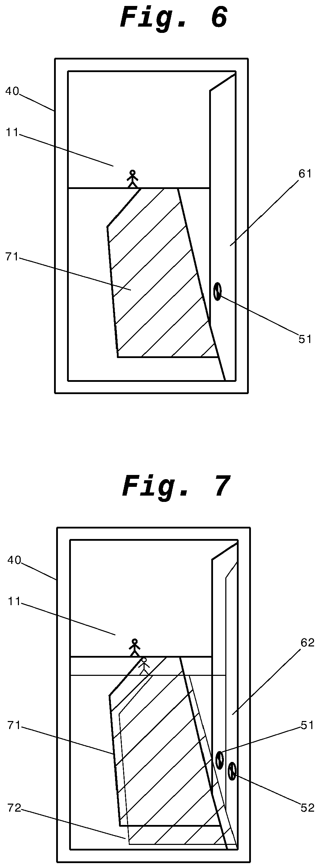

In Fig. 6 ist die Wiedergabeeinheit 40 gezeigt, deren Anzeige im Wesentlichen der Anzeige der Wiedergabeeinheit aus Fig. 4 entspricht. Allerdings ist in Fig. 6 ein Referenzgeber 50 gezeigt, der an einer unteren hinteren rechten Ecke der Fahrerkabine 61 des LKW 60 angebracht ist. Der Referenzgeber 50 in Fig. 4 ist eine Art Fadenkreuz, das unmittelbar auf der Fahrerkabinen-Außenwand angebracht wird. Beispielsweise kann der Referenzgeber 50 ein dauerhafter Aufkleber sein oder bei Lackierung des LKW 60 an der Fahrerkabinen-Außenwand aufgebracht sein. Der Referenzgeber ist damit dauerhaft an der Fahrerkabinen-Außenwand angebracht. Alternativ kann der Referenzgeber 50 aber auch ein (wieder ablösbarer) Aufkleber sein, kann über einen Magnetfuß an der Fahrerkabinen-/LKW-Außenwand anbringbar oder anderweitig wieder von der Fahrerkabinen-/LKW-Außenwand lösbar ausgebildet sein, so dass er nur bei Bedarf, d.h. bei geplanter Verifizierung und ggf. Kalibrierung des indirekten Sichtsystems 1 an der Karosserie des LKW befestigt wird. Der Referenzgeber kann darüber hinaus an allen denkbaren und geeigneten Stellen an der Karosserie des LKW 60 angebracht werden, kann aber auch an einem fest definierten Teil eines Fahrzeugaufbaus, wie z.B. eines Kastenaufbaus angebracht werden. Alternativ sind spezielle Formen der Fahrzeugkarosserie des LKW (z.B. das Rad, die Heckkante der Fahrerkabine 61 oder des Aufbaus 62) selbst der Referenzgeber 50.

Fig. 7 zeigt nochmals die Wiedergabeeinheit 40 aus Fig. 6 und einen Verifiziervorgang, der von der Bildbearbeitungseinheit 30 ausgeführt wird und bei dem eine Verifizierung des Aufnahmebereichs 11 der Bildbaufnahmeeinheit 10 durch Vergleichen einer Referenzgeber-Istposition 52 und einer Referenzgeber-Sollposition 51 auf der Wiedergabeeinheit 40 erfolgt, z.B. entweder digital durch ein Overlay oder manuell durch Auflegen einer Folie, auf der jeweils die Referenzgeber-Sollposition definiert ist. Das Overlay bzw. die Folie entsprechen vorliegend der Verifiziereinheit.

Während in Fig. 6 nur die Sollsituation auf der Wiederabeeinheit 40 gezeigt ist, sind in Fig. 7 die Sollsituation und die Istsituation auf der Wiederabeeinheit 40 gezeigt. Genauer ist in Fig. 6 gezeigt, dass sich der Referenzgeber 50 in der Sollsituation an der Referenzgeber-Sollposition 51 und in der Istsituation an der Referenzgeber-Istposition 52 befindet. Mit einer gegenüber der Referenzgeber-Sollposition 51 verschobenen Referenzgeber-Istposition 52 ist auch das Istsichtfeld 72 gegenüber dem Sollsichtfeld 71 verschoben.

Die Abweichung der Referenzgeber-Istposition 52 und der Referenzgeber-Sollposition 51 auf dem Bildsensor 20 wird bei der in Fig. 6 gezeigten Ausführungsform durch ein geeignetes in der Bildbearbeitungseinheit 30 gespeichertes Computerprogramm, wie. z.B. durch Bilderkennung, ermittelt und dem Fahrer auf der Wiedergabeeinheit 40 durch Übereinanderlegen (Overlay) der Sollsituation und der Istsituation angezeigt. Gegebenenfalls kann die Anzeige der von der Sollsituation abweichenden Istsituation auf der Wiedergabeeinheit 40 auch durch ein zusätzliches Signal, wie beispielsweise durch einen Warnton oder eine entsprechende Anzeige auf der Wiedergabeeinheit 40 oder dem Armaturenbrett, dem Fahrer angezeigt werden. Der Fahrer kann dann z.B. die Abweichung von Referenzgeber-Istposition 52 zu Referenzgeber-Sollposition 51 manuell durch Einstellung der Bilderfassungseinheit 10 korrigieren, so dass Referenzgeber-Istposition 52 gleich Referenzgeber-Sollposition 51 ist. In einem weiteren oder einem zu der Signalausgabe alternativen Schritt kann aber auch die Bildbearbeitungseinheit 30 den Fehler in der Abbildung auf dem Bildsensor, d.h., dass die Referenzgeber-Istposition 52 ungleich der Referenzgeber-Sollposition 51 ist, selbst mittels eines geeigneten Kalibrierprogramms korrigieren und das indirekte Sichtsystem somit kalibrieren. Eine Kalibrierung des Aufnahmebereichs 11 der Bilderfassungseinheit 10 durch die Bildbearbeitungseinheit 30 kann automatisch erfolgen. Allgemein wird die Bestimmung, ob die Referenzgeber-Istposition 52 gleich der Referenzgeber-Sollposition 51 ist, entweder auf ein Signal hin, wie beispielsweise einen entsprechenden Befehl des Fahrers, auf ein Fahrzeugereignis hin oder durch ein entsprechendes Kalibrierprogramm gestartet. Ein Fahrzeugereignis kann das Starten des Fahrzeugs, das Einschalten der Zündung, das Ankuppeln eines Anhängers, etc. sein. Ein Kalibrierprogramm führt durch eine entsprechende Software getaktet ein Bestimmen von Referenzgeber-Istposition 52 durch, vergleicht Referenzgeber-Istposition 52 mit Referenzgeber-Sollposition 51 und korrigiert die Referenzgeber-Istposition 52 selbstständig so, dass sie mit der Referenzgeber-Sollposition 51 übereinstimmt.

Während in Fig. 6 gezeigt ist, dass der Referenzgeber 50 an einem Heckbereich der Fahrerkabine 61 angeordnet ist, zeigt Fig. 7, dass der Referenzgeber 50 an einem Heckbereich eines Aufbaus 62 des LKW 60 angeordnet ist.

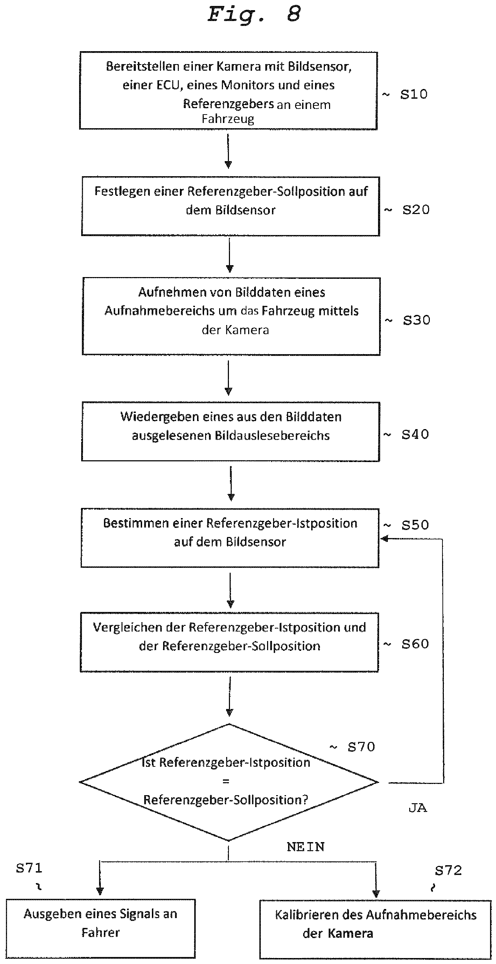

In Fig. 8 ist ein Flussdiagram gezeigt, das den Verifiziervorgang bzw. Kalibriervorgang wiedergibt. In Schritt S10 wird eine Bildaufnahmeeinheit 10, die wenigstens einen Bildsensor 20 aufweist und zum Aufnehmen von Bilddaten wenigstens eines Aufnahmebereichs 11 um den LKW ausgebildet ist, eine ECU als Bildbearbeitungseinheit 30, die zum Bearbeiten der von der Bildaufnahmeeinheit 10 aufgenommenen Bilddaten ausgebildet ist, und ein Monitor als Wiedergabeeinheit 40, die zum Wiedergeben der von der Bildbearbeitungseinheit 30 bearbeiteten Bilddaten ausgebildet ist, bereitgestellt. Darüber hinaus wird in Schritt S10 ein Referenzgeber bereitgestellt, der an einer definierten Position an dem LKW 60 angeordnet ist, so dass der Referenzgeber 50 im Betrieb des Sichtsystems 1 in einem Aufnahmebereich der Bildaufnahmeeinheit 10 liegt und auf dem Bildsensor 20 abgebildet wird.

In Schritt S20 wird entsprechend eine Referenzgeber-Sollposition 51 auf dem Bildsensor 20 festgelegt, an der Referenzgeber 50 in einer idealen Fahrumgebung abgebildet wird.

In Schritt S30 nimmt die Bilderfassungseinheit Bilddaten des Aufnahmebereichs 11 um das Fahrzeug 60 auf dem Bildsensor 20 auf, die den Referenzgeber 50 enthalten.

In Schritt S40 wird der aus den Bilddaten des Bildsensors 20 ausgelesene Bildauslesebereich 22 auf der Wiedergabeeinheit 40 angezeigt.

In Schritt S50 wird eine Referenzgeber-Istposition 52 des Referenzgebers 50 auf dem Bildsensor 20 bestimmt, und in Schritt S60 werden die Referenzgeber-Istposition 52 und die Referenzgeber-Sollposition 51 dahingehend miteinander verglichen, ob die Referenzgeber-Istposition 52 gleich der Referenzgeber-Sollposition 51 ist oder nicht (S70).

Wenn die Referenzgeber-Istposition 52 gleich der Referenzgeber-Sollposition 52 ist (JA in S70), kehrt der Verifiziervorgang zu Schritt S50 zurück und bestimmt die Referenzgeber-Istposition 52. Das erneute Bestimmen der Referenzgeber-Istposition 52 kann entweder auf ein Signal hin erfolgen, wie z.B. ein manuelles Signal durch den Fahrer oder ein automatisch generiertes Signal, wie beispielsweise nach Ablauf einer gewissen Zeitspanne, oder kann unmittelbar nach Bestimmen, dass die Referenzgeber-Istposition 52 gleich der Referenzgeber-Sollposition 52 ist, ohne zeitliche Verzögerung, d.h. in einer Abfrageschleife, erfolgen.

Wenn die Referenzgeber-Istposition 52 nicht gleich der Referenzgeber-Sollposition 52 ist (NEIN in S70), schreitet der Vorgang entweder zu Schritt S71 voran und gibt dem Fahrer ein Signal aus, das die Abweichung von Referenzgeber-Istposition 52 zu Referenzgeber-Sollposition 52 dem Fahrer anzeigt, oder zu Schritt S72 voran, in dem der Aufnahmebereich 11 der Kamera 10 kalibriert wird, d.h. so korrigiert wird, dass die Referenzgeber-Istposition 52 gleich der Referenzgeber-Sollposition 52 ist. Es ist auch denkbar, dass die Schritte S71 und S72 zeitlich hintereinander folgen, d.h. dass dem Fahrer zunächst ein Signal ausgegeben wird, das die Abweichung von Referenzgeber-Istposition 52 zu Referenzgeber-Sollposition 52 dem Fahrer anzeigt, und unmittelbar auf das Ausgeben des Signals folgend die Korrektur der Referenzgeber-Istposition 52 erfolgt, so dass die Referenzgeber-Istposition 52 gleich die Referenzgeber-Sollposition 52 ist.

Der Vorgang aus Fig. 8 wird nach Schritt S71 beendet und kann nach Schritt S72 entweder wieder zu Schritt S70 zurückkehren, um zu überprüfen, ob die Referenzgeber-Istposition 52 gleich die Referenzgeber-Sollposition 52 ist oder kann alternativ auch nach Schritt S72 beendet werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 1: indirektes Sichtsystem
- 10: Bildaufnahmeeinheit, Kamera
- 11: Aufnahmebereich, Aufnahmekegel
- 20: Bildsensor
- 21: Bildauswertebereich
- 22: Bildauslesebereich
- 23: Referenzgeber-Sollbereich
- 30: Bildbearbeitungseinheit, ECU
- 40: Wiedergabeeinheit, Monitor
- 50: Referenzgeber
- 51: Referenzgeber-Sollposition
- 52: Referenzgeber-Istposition
- 53: Referenzgeber-Halteelement
- 60: Fahrzeug
- 61: Fahrerkabine
- 62: Fahrzeugaufbau
- 71: Sollsichtfeld
- 72: Istsichtfeld
- 73: geometrischer Bezug

## Patentansprüche

1. Verfahren zum Verifizieren eines indirekten Sichtsystems (1) eines Fahrzeugs (60), enthaltend
Bereitstellen (S10) wenigstens einer Bildaufnahmeeinheit (10), die wenigstens einen Bildsensor (20) aufweist und zum Aufnehmen von Bilddaten wenigstens eines Aufnahmebereichs (11) um das Fahrzeug (60) ausgebildet ist,
Bereitstellen (S10) wenigstens einer Bildbearbeitungseinheit (30), die zum Bearbeiten der von der Bildaufnahmeeinheit (10) aufgenommenen Bilddaten ausgebildet ist,
Bereitstellen (S10) wenigstens einer Wiedergabeeinheit (40), die zum Wiedergeben der von der Bildbearbeitungseinheit (30) bearbeiteten Bilddaten ausgebildet ist,
Bereitstellen (S10) wenigstens eines Referenzgebers (50) an einer definierten Position an dem Fahrzeug (60), so dass der Referenzgeber (50) in dem Aufnahmebereich (11) der Bildaufnahmeeinheit (10) liegt und auf dem Bildsensor (20) abgebildet wird, wobei der Referenzgeber (50) an einer Referenzgeber-Sollposition (51) auf dem Bildsensor (20) definiert ist (S20),
Aufnehmen (S30) der Bilddaten des wenigstens einen Aufnahmebereichs (11) um das Fahrzeug (60) auf dem Bildsensor (20), die den Referenzgeber (50) enthalten,
Wiedergeben (S40) wenigstens eines aus den Bilddaten des Bildsensors (20) ausgelesenen Bildauslesebereichs (22) auf der Wiedergabeeinheit (40),
Bestimmen (S50) einer Referenzgeber-Istposition (52) des Referenzgebers (50) auf dem Bildsensor (20), und
Vergleichen (S60, S70) der Referenzgeber-Istposition (52) und der Referenzgeber-Sollposition (51) dahingehend, ob die Referenzgeber-Istposition (52) gleich der Referenzgeber-Sollposition (51) ist oder nicht.

2. Verfahren nach Anspruch 1, wobei die Referenzgeber-Sollposition (51) einen festen geometrischen Bezug (73) zu wenigstens einem von der Bildaufnahmeeinheit (10) aufgenommenen Sollsichtfeld (71) hat.

3. Verfahren nach Anspruch 1 oder 2, wobei wenigstens die Referenzgeber-Istposition (52) auf der Wiedergabeeinheit (40) abgebildet wird und das Vergleichen (S60, S70) auf der Wiedergabeeinheit (40) erfolgt, oder wobei das Vergleichen (S60, S70) in der Bildbearbeitungseinheit (30) erfolgt.

4. Verfahren nach Anspruch 3, wobei das Verfahren den zusätzlichen Schritt des Vergleichens eines Istsichtfelds (72) und eines Sollsichtsfelds (71) enthält,
wobei das Sollsichtfeld (71) bevorzugt ein gesetzlich vorgeschriebenes Sichtfeld ist, wobei das indirekte Sichtsystem (1) weiter bevorzugt ein Spiegelersatzsystem ist.

5. Verfahren nach Anspruch 3 oder 4, wobei das Vergleichen der Referenzgeber-Istposition (52) und der Referenzgeber-Sollposition (51) durch die Bildbearbeitungseinheit (30) in wenigstens einem Bildauswertebereich (21) des Bildsensors (20) erfolgt,
wobei der Bildauslesebereich (22) bevorzugt einen Bildauswertebereich (21) enthält.

6. Verfahren nach einem der vorhergehenden Ansprüche, wobei das Verfahren den zusätzlichen Schritt des Ausgebens eines Signals an den Fahrer enthält, wenn die Referenzgeber-Istposition (52) ungleich der Referenzgeber-Sollposition (51) ist.

7. Verfahren nach einem der vorhergehenden Ansprüche, wobei das Verfahren den zusätzlichen Schritt des Ausführens einer Kalibrieraktion enthält, wenn die Referenzgeber-Istposition (52) ungleich der Referenzgeber-Sollposition (51) ist,
wobei die Kalibrieraktion bevorzugt das Einstellen des Aufnahmebereichs (11) der Bildaufnahmeeinheit (10) enthält, so dass Referenzgeber-Istposition (52) gleich Referenzgeber-Sollposition (51) ist,
wobei das Einstellen des Aufnahmebereichs (11) der Bildaufnahmeeinheit (10) weiter bevorzugt durch Ausrichten wenigstens eines Teils der Bildaufnahmeeinheit (10) und/oder durch Anpassen des wenigstens einen Bildauslesebereichs (22) auf dem Bildsensor (20) erfolgt,
wobei die Kalibrieraktion weiter bevorzugt durch ein von der Bildbearbeitungseinheit (30) empfangenes Signal erfolgt.

8. Indirektes Sichtsystem (1) eines Fahrzeugs (60), das ausgebildet ist zum Durchführen des Verfahrens nach einem der Ansprüche 1 bis 7, enthaltend
die wenigstens eine Bildaufnahmeeinheit (10), die einen Bildsensor (20) aufweist und zum Aufnehmen von Bilddaten wenigstens eines Aufnahmebereichs (11) um das Fahrzeug (60) ausgebildet ist,
die wenigstens eine Bildbearbeitungseinheit (30), die zum Bearbeiten der von der Bildaufnahmeeinheit (10) aufgenommenen Bilddaten ausgebildet ist,
die wenigstens eine Wiedergabeeinheit (40), die zum Wiedergeben der von der Bildbearbeitungseinheit (30) bearbeiteten Bilddaten ausgebildet ist,
die wenigstens einen Referenzgeber (50), der ausgebildet ist, dass er an einer definierten Position an dem Fahrzeug (60) anbringbar ist, und, in dem an dem Fahrzeug (60) montierten Zustand des indirekten Sichtsystems (1), in einem Aufnahmebereich (11) der Bildaufnahmeeinheit (10) liegt und auf dem Bildsensor (20) abgebildet wird, wobei der Referenzgeber (50) an der Referenzgeber-Sollposition (51) auf dem Bildsensor (20) abgebildet wird,
wenigstens eine Verifiziereinheit, die zum Definieren einer Referenzgeber-Sollposition (51) und Bestimmen einer Referenzgeber-Istposition (52) auf dem Bildsensor (20) ausgebildet ist.

9. Indirektes Sichtsystem (1) nach Anspruch 8, wobei das Sichtsystem weiter eine Kalibriereinheit enthält, die ausgebildet ist zum Ausführen einer Kalibrieraktion, und/oder wobei der Referenzgeber (50) ein geometrisches Muster enthält.

10. Indirektes Sichtsystem (1) nach einem der Ansprüche 8 oder 9, wobei der Referenzgeber (50) Licht reflektiert, oder wobei der Referenzgeber (50) eine Lichtquelle ist, wobei die Lichtquelle bevorzugt eine am Fahrzeug (60) bestehende Leuchte ist, wobei die Lichtquelle weiter bevorzugt ausgebildet ist zum Kenntlichmachen einer Verschmutzung der Optik der Bildaufnahmeeinheit (10) auf der Wiedergabeeinheit (40).

11. Indirektes Sichtsystem (1) nach einem der Ansprüche 8 bis 10, ferner enthaltend mindestens zwei Aufnahmeeinheiten, wobei jeder Aufnahmeeinheit jeweils ein Referenzgeber (50) zugewiesen ist oder wobei den Aufnahmeeinheiten ein gemeinsamer Referenzgeber (50) zugewiesen ist.

12. Indirektes Sichtsystem (1) nach einem der Ansprüche 8 bis 11, wobei das Sichtsystem (1) ein Spiegel-Ersatz-System ist.

13. Fahrzeug (60) mit einem indirekten Sichtsystem nach einem der Ansprüche 8 bis 12, wobei die Bildaufnahmeeinheit (10) in einem Halteelement angeordnet ist, welches sich von dem Fahrzeug (60) weg erstreckt.

14. Fahrzeug (60) nach Anspruch 13, wobei der Referenzgeber (50) an einer Außenseite des Fahrzeugführerhauses angeordnet ist, oder
wobei der Referenzgeber (50) an einer Seitenflanke des Fahrzeugs (60) angebracht ist, oder
wobei das Fahrzeug (60) ein Nutzfahrzeug ist und der Referenzgeber (50) an einer Frontbeplankung des Fahrzeugs (60) angebracht ist, oder
wobei der Referenzgeber (50) an einem Fahrzeugaufbau des Fahrzeugs (60) angebracht ist.

15. Fahrzeug (60) nach Anspruch 13 oder 14, wobei der Referenzgeber (50) über ein Referenzgeber-Halteelement an dem Fahrzeug (60) angebracht ist, wobei der Referenzgeber (50) bevorzugt lösbar mit dem Fahrzeug (60) verbunden ist.
